# FASCICULE DE BREVET EUROPEEN

(11) **EP 3 864 378 B1**
(45) Date de publication et mention de la délivrance du brevet: **09.10.2024**
(21) Numéro de dépôt: 19816827.0
(22) Date de dépôt: 11.10.2019
(51) Int. Cl.: G01D 5/353, G02B 6/02

(54) **CAPTEUR À FIBRE OPTIQUE À RÉSEAU DE BRAGG À HAUTE TENUE EN TEMPÉRATURE ET SON PROCÉDÉ DE FABRICATION**
FASEROPTISCHER SENSOR MIT BRAGG-GITTER MIT HOHER TEMPERATURSTABILITÄT UND HERSTELLUNGSVERFAHREN DAFÜR
FIBEROPTIC SENSOR WITH A HIGH TEMPERATURE RESISTANT BRAGG GRATING AND MANUFACTURING METHOD THEREFOR

(30) Priorité: 12.10.2018 FR 1859499
(43) Date de publication de la demande: 18.08.2021
(73) Titulaire: Commissariat à l'énergie atomique et aux énergies alternatives, 75015 Paris (FR)
(72) Inventeur: DESMARCHELIER, Rudy, 28310 TOURY (FR); LAFFONT, Guillaume, 92190 MEUDON (FR)
(74) Mandataire: Brevalex
(86) Numéro de dépôt international: PCT/FR2019/052422
(87) Numéro de publication internationale: WO 2020/074843

(56) Documents cités:
- WO-A1-98/18031
- US-A- 5 101 090
- US-A1- 2017 285 261
- MIHAILOV ET AL: "Application of femtosecond laser induced Bragg gratings in silica and non-silica based optical fibers", SPIE, PO BOX 10 BELLINGHAM WA 98227-0010 USA, vol. 7589, 25 February 2010 (2010-02-25), XP040517920
- YANG TINGTING ET AL: "Fiber Bragg gratings inscriptions in multimode fiber using 800nm femtosecond laser for high-temperature strain measurement", OPTICS AND LASER TECHNOLOGY, ELSEVIER SCIENCE PUBLISHERS BV., AMSTERDAM, NL, vol. 93, 6 March 2017 (2017-03-06), pages 138 - 142, XP029970347, ISSN: 0030-3992, DOI: 10.1016/J.OPTLASTEC.2017.01.033

## Description

### DOMAINE TECHNIQUE

L'invention se situe dans le domaine des capteurs de température et de déformation et, plus précisément, dans le domaine des capteurs à fibre optique à réseau de Bragg pour la mesure de températures et de déformations dans un environnement à haute température, typiquement supérieur à 800 °C. Elle concerne un tel capteur ainsi que son procédé de fabrication.

L'invention s'applique notamment au contrôle en temps réel de la température et des déformations dans un environnement difficile, par exemple dans le domaine nucléaire ou aéronautique. Le capteur de température peut être intégré à la surface d'une structure à surveiller, voire intégré au sein de cette structure. Il est alors possible de réaliser un contrôle de santé intégré.

### ÉTAT DE LA TECHNIQUE ANTÉRIEURE

Le contrôle de santé intégré, ou « structural health monitoring » en anglais, consiste à mesurer les sollicitations thermiques et/ou mécaniques appliquées à une structure et à en déduire un état de cette structure, notamment la présence de dommages. Les capteurs à fibre optique à réseau de Bragg sont particulièrement appropriés pour la réalisation de ces mesures. Ils permettent de fournir des mesures de température et de déformation aussi bien en régime statique ou quasi-statique qu'en régime dynamique. Il est notamment possible d'effectuer des mesures vibratoires, des mesures d'accélération ou encore de détecter des ondes acoustiques. Les données collectées peuvent alors être exploitées pour détecter et caractériser la présence d'un dommage dans la structure. En outre, un même capteur à fibre optique peut comporter plusieurs réseaux de Bragg agissant dans des bandes de longueurs d'onde différenciées et fournissant ainsi autant d'éléments sensibles pour une même fibre optique, ces éléments étant adressables individuellement par multiplexage spectral. Un adressage individuel est également possible par multiplexage temporel ou par multiplexage à la fois spectral et temporel. Il est alors en outre possible de localiser un dommage dans la structure. Cependant, les fibres optiques de ce type de capteur présentent une résistance mécanique insuffisante à des températures élevées, typiquement quelques centaines de degrés Celsius. En particulier, une fibre optique dont la gaine mécanique est en polyimide ne peut être exposée à des températures supérieures à 350 °C, au risque d'une dégradation de la gaine mécanique. La fibre optique n'est alors plus protégée mécaniquement et risque de casser, a fortiori lorsqu'elle est soumise dans le même temps à des contraintes mécaniques relativement importantes.

Un second type de capteur peut être utilisé pour réaliser des mesures réparties de température ou de déformation dans une structure. Ce type de capteur repose sur la technique de réflectométrie optique dans le domaine fréquentiel, appelée « OFDR » d'après la dénomination anglo-saxonne « Optical Frequency Domain Reflectometry ». La technique consiste à exploiter le signal rétrodiffusé dans le coeur d'une fibre optique par diffusion Rayleigh. Ce type de capteur peut être utilisé dans un environnement à haute température en appliquant un revêtement métallique, par exemple en or ou en aluminium, sur la gaine de protection mécanique de la fibre optique, voire directement sur la gaine optique. Le revêtement métallique est appliqué au cours du processus de fabrication de la fibre optique, après l'étape de tirage. Il permet de renforcer la tenue mécanique de la fibre optique. Cependant, lorsque la fibre optique est soumise à de hautes températures, les mesures subissent une dérive qui les rend difficilement exploitables. En outre, la résolution spatiale de ce type de capteur est supérieure à celle d'un capteur à fibre optique à réseau de Bragg et sa portée de mesure nettement inférieure.

Une solution pour obtenir un capteur de température et de déformation à base d'une fibre optique qui présenterait à la fois une faible résolution spatiale, une longue portée et une bonne tenue mécanique à haute température consisterait à réaliser un capteur à fibre optique à réseau de Bragg à partir d'une fibre optique comportant un revêtement métallique sur sa surface. La réalisation d'un tel capteur est néanmoins empêchée du fait que le revêtement métallique bloque le rayonnement laser utilisé pour l'inscription du réseau de Bragg dans la fibre optique.

La demande WO 98/18031 A1 décrit un dispositif d'inscription d'un réseau de Bragg dans une fibre optique à l'aide d'un dispositif agencé pour retirer la gaine mécanique sur un tronçon de fibre optique préalablement à l'inscription du réseau de Bragg. La gaine mécanique est retirée sur l'ensemble du tronçon de fibre optique, ce qui fragilise grandement la fibre optique et impose de recouvrir à nouveau le tronçon de fibre optique par un revêtement de protection après l'inscription du réseau de Bragg.

Compte tenu de ce qui précède, l'invention a pour objectif de fournir un capteur de température et de déformation pour environnement à haute température qui présente une faible résolution spatiale, une longue portée et une stabilité des mesures au cours du temps. L'invention a aussi pour objet de fournir un capteur de température et de déformation fournissant des mesures réparties et pouvant s'intégrer facilement à une structure. L'invention a encore pour objectif de fournir un capteur de température et de déformation dont les coûts de conception, de fabrication et de maintenance sont compatibles avec une utilisation à échelle industrielle.

### EXPOSÉ DE L'INVENTION

À cet effet, l'invention repose sur la formation d'une ouverture, également appelée « fenêtre », dans un revêtement de protection mécanique entourant le coeur et la gaine optique d'une fibre optique afin de permettre l'inscription d'un réseau de Bragg au travers de cette ouverture. Le revêtement de protection mécanique, également appelé « gaine mécanique », peut ainsi être formé à partir de tout matériau, indépendamment de son aptitude à laisser passer le rayonnement laser nécessaire pour l'inscription du réseau de Bragg.

Plus précisément, l'invention a pour objet un capteur à fibre optique à réseau de Bragg défini selon la revendication 1. Selon l'invention, la gaine mécanique comprend une ouverture s'étendant radialement sur toute son épaisseur et la fibre optique comporte un réseau de Bragg inscrit dans le coeur au niveau de l'ouverture.

La fibre optique est typiquement une fibre optique monomode. Elle peut présenter un diamètre de coeur inférieur à 10 µm (micromètres), un diamètre de gaine optique compris entre 80 µm et 150 µm et un diamètre de gaine mécanique compris entre 200 µm et 400 µm. En particulier, la gaine mécanique présente par exemple un diamètre de 250 µm.

La fibre optique peut comporter une ou plusieurs gaines de protection supplémentaires. En particulier, elle peut comporter une gaine de protection supplémentaire interposée entre la gaine optique et la gaine mécanique. Cette gaine de protection supplémentaire est par exemple en polyimide ou en acrylate. L'ouverture peut alors s'étendre radialement uniquement sur l'épaisseur de la gaine mécanique ou sur l'épaisseur de la gaine mécanique et une ou plusieurs des gaines de protection supplémentaire, en fonction de leur transparence au rayonnement laser utilisé pour l'inscription du réseau de Bragg.

L'ouverture est adaptée pour permettre l'inscription des motifs d'un réseau de Bragg par passage d'un faisceau laser à travers elle. Ses dimensions sont ainsi adaptées aux dimensions du faisceau laser et aux dimensions du réseau de Bragg.

En particulier, pour un réseau de Bragg s'étendant de manière longitudinale sur un tronçon de la fibre optique appelé « tronçon sensible » et une ouverture s'étendant de manière longitudinale sur un tronçon de la fibre optique appelé « tronçon de découpe », la longueur du tronçon de découpe peut être supérieure ou égale à la longueur du tronçon sensible.

Il est à noter que l'ouverture est partielle sur la périphérie de la gaine mécanique. Autrement dit, la gaine mécanique n'est pas retirée sur toute la section radiale du tronçon de découpe. Ce retrait de matière localisé présente l'avantage de n'impacter que faiblement les propriétés mécaniques de la fibre optique, notamment sa résistance à la rupture. Il n'est alors pas indispensable de combler l'espace correspondant à l'ouverture par un ajout de matière, par exemple du métal ou un polymère.

L'ouverture s'étend selon l'invention de manière circonférentielle sur un secteur angulaire défini de sorte à ce qu'elle présente, par projection dans un plan parallèle à un axe longitudinal de la fibre optique, une largeur supérieure ou égale au diamètre du coeur. Lorsque les motifs du réseau de Bragg présentent des dimensions inférieures au diamètre du coeur, la largeur de l'ouverture peut être déterminée de manière à être supérieure ou égale aux dimensions des motifs du réseau de Bragg. En l'occurrence, la largeur de l'ouverture peut être supérieure ou égale à la dimension correspondante des motifs du réseau de Bragg, c'est-à-dire la dimension des motifs dans ledit plan parallèle à l'axe longitudinal de la fibre optique. À titre d'exemple, le réseau de Bragg peut être formé par des sphères. La largeur de l'ouverture peut alors être supérieure ou égale au diamètre de ces sphères. Le secteur angulaire est par exemple compris entre 0,5° et 120°. Plus précisément, il peut être compris entre 0,5° et 10° ou entre 75° et 120°.

Le capteur à fibre optique selon l'invention peut être agencé pour fournir des mesures réparties de température et de déformation. Ainsi, la gaine mécanique peut comporter une pluralité d'ouvertures, chaque ouverture s'étendant radialement sur toute l'épaisseur de la gaine mécanique, et la fibre optique peut comporter une pluralité de réseaux de Bragg, chaque réseau de Bragg étant inscrit dans le coeur au niveau de l'une des ouvertures. De préférence, chaque ouverture s'étend de manière longitudinale sur un tronçon de découpe dont la longueur est supérieure ou égale à la longueur du tronçon sensible correspondant. La largeur de chaque ouverture est aussi de préférence supérieure ou égale au diamètre du coeur ou, au minimum, aux dimensions des motifs du réseau de Bragg correspondant.

L'invention a également pour objet un procédé de fabrication d'un capteur à fibre optique à réseau de Bragg à partir d'une fibre optique défini selon la revendication 5. Selon l'invention, le procédé comprend :
▪ une étape d'ablation de la gaine mécanique sur un tronçon de la fibre optique appelé « tronçon de découpe », de manière à former une ouverture s'étendant radialement sur toute l'épaisseur de la gaine mécanique, et
▪ une étape d'inscription d'un réseau de Bragg dans le coeur au travers de l'ouverture.

Préalablement à l'étape d'ablation, la gaine mécanique recouvre typiquement l'ensemble de la surface de la gaine optique. La gaine mécanique est par exemple appliquée sur la fibre optique au cours de son processus de fabrication, par exemple à l'issue de l'étape de tirage.

L'étape d'ablation comprend par exemple une insolation de la gaine mécanique par un faisceau laser focalisé au voisinage de la gaine mécanique, le faisceau laser étant formé d'impulsions femtosecondes. Par « impulsion femtoseconde », il est fait référence à une impulsion dont la durée est comprise entre quelques femtosecondes, par exemple 2 fs, et quelques centaines de femtosecondes, par exemple 10000 fs.

L'étape d'ablation peut être configurée de sorte que l'ouverture s'étende de manière circonférentielle sur un secteur angulaire défini de sorte que l'ouverture présente, par projection dans un plan parallèle à un axe longitudinal de la fibre optique, une largeur supérieure ou égale à une dimension correspondante des motifs du réseau de Bragg. Elle peut également être configurée de sorte que l'ouverture s'étende de manière circonférentielle sur un secteur angulaire défini de sorte que l'ouverture présente, par projection dans un plan parallèle à un axe longitudinal de la fibre optique, une largeur supérieure ou égale à un diamètre du coeur de la fibre optique. L'étape d'ablation est par exemple configurée de sorte que l'ouverture s'étende de manière circonférentielle sur un secteur angulaire compris entre 0,5 degré et 120 degrés. Le secteur angulaire est par exemple compris entre 0,5 degré et 10 degrés pour un faisceau laser relativement étroit, et entre 75 degrés et 120 degrés pour un faisceau laser relativement large.

L'étape d'ablation peut comprendre un balayage du faisceau laser sur la gaine mécanique. Le balayage peut être optique ou mécanique. Il est par exemple réalisé à l'aide d'un modulateur spatial de lumière ou « spatial light modulator » en anglais. Un balayage est par exemple utile lorsque le faisceau laser présente, au niveau de la gaine mécanique, une section dont la surface est inférieure à la surface de l'ouverture.

Par ailleurs, l'étape d'ablation peut comprendre une insolation de chaque point de la gaine mécanique correspondant à l'ouverture par une pluralité d'impulsions. Une pluralité d'impulsions est nécessaire lorsque chaque impulsion du faisceau laser est apte à retirer une épaisseur prédéterminée de gaine mécanique qui est inférieure à une épaisseur de la gaine mécanique.

Selon une forme particulière de réalisation, chaque impulsion du faisceau laser présente une fluence énergétique supérieure ou égale à un seuil de fluence énergétique d'ablation de la gaine mécanique et inférieure ou égale (de préférence strictement inférieure) à un seuil de fluence énergétique d'ablation de la gaine optique. Une telle fluence énergétique permet de retirer le matériau de la gaine mécanique sans retirer le matériau de la gaine optique. Le seuil de fluence énergétique d'ablation de l'or, pour un faisceau laser de longueur d'onde égale à 780 nm (nanomètres) et une durée d'impulsion de 150 fs est de 0,5 J/cm² (Joule par centimètre carré). Le seuil de fluence énergétique d'ablation de la silice, pour un faisceau laser de longueur d'onde égale à 825 nm et une durée d'impulsion de 150 fs est de 2 J/cm². Ainsi, pour un faisceau laser de longueur d'onde environ égale à 800 nm et une durée d'impulsion de 150 fs, la fluence énergétique du faisceau laser peut être comprise entre 0,5 J/cm² et 1,9 J/cm².k

Avantageusement, le point focal du faisceau laser est positionné en amont de la gaine mécanique. Autrement dit, le point focal du faisceau laser est positionné à distance de la surface de la gaine mécanique, du côté opposé à la gaine optique. Ce positionnement permet de limiter le niveau de fluence énergétique dans la gaine optique en cas de léger décalage du positionnement du point focal. En effet, la fluence énergétique du faisceau laser augmente depuis le laser pour atteindre un maximum au point focal et diminue après le point focal. Ainsi, en cas de décalage du point focal, la fluence énergétique dans la gaine optique reste inférieure à la fluence énergétique dans la gaine mécanique.

Selon un premier mode de réalisation, l'étape d'inscription d'un réseau de Bragg comprend une insolation du coeur de la fibre optique par un faisceau laser ultraviolet, le coeur de la fibre optique étant photosensible. Le faisceau laser peut être focalisé au voisinage du coeur de la fibre optique. Il peut être continu ou impulsionnel. Chaque impulsion présente par exemple une durée comprise entre 5 ns (nanosecondes) et 500 ns.

Selon un deuxième mode de réalisation, l'étape d'inscription d'un réseau de Bragg comprend une insolation du coeur de la fibre optique par un faisceau laser femtoseconde. Le coeur de la fibre optique n'est pas nécessairement photosensible. L'inscription du réseau de Bragg est alors qualifiée d' « écriture directe ». Le faisceau laser peut être focalisé au voisinage du coeur de la fibre optique. La longueur d'onde du faisceau laser peut être située dans la plage de longueurs d'onde du rayonnement infrarouge (700 nm à 1 mm). Le deuxième mode de réalisation présente l'avantage, par rapport au premier, de ne nécessiter que d'une seule source laser pour réaliser successivement l'ablation de la gaine mécanique et l'inscription du réseau de Bragg.

Le réseau de Bragg peut être inscrit en mode point par point ou en mode plan par plan.

L'étape d'inscription du réseau de Bragg peut comporter, en outre, l'application d'un liquide d'indice à la surface de la gaine optique, le liquide d'indice présentant un indice de réfraction égal (ou sensiblement égal) à l'indice de réfraction de la gaine optique. Ainsi, dans le cas où la gaine optique présenterait une irrégularité de surface due à l'ablation de la gaine mécanique, le liquide d'indice permet de former une surface lisse d'un point de vue optique.

Selon une forme particulière de réalisation du capteur ou de son procédé de fabrication, la gaine mécanique comprend un matériau dont la résistance pyroscopique est supérieure ou égale à 800 °C (degrés Celcius). Autrement dit, la gaine mécanique doit résister à une température minimale de 800 °C sans ramollir et sans s'affaisser sous son propre poids.

La gaine mécanique peut notamment comprendre un métal ou être constituée d'un ou plusieurs métaux. La gaine mécanique comprend par exemple de l'aluminium, de l'or, du cuivre, de l'argent ou du nickel. La gaine mécanique peut également comprendre du bore, du bore amorphe, de l'alumine (oxyde d'aluminium), une composition comprenant de la silice et de l'alumine, de la silice dopée en alumine, de la zircone (oxyde de zirconium), du dioxyde d'étain, du dioxyde de titane et/ou une céramique. Dans une forme particulière de réalisation, la gaine mécanique comprend plusieurs couches dont chacune est constituée d'un ou plusieurs matériaux.

La gaine mécanique présente par exemple une épaisseur comprise 10 µm et 500 µm.

La réalisation d'un capteur à fibre optique à réseau de Bragg par inscription du réseau de Bragg au travers d'une fenêtre formée dans la gaine mécanique présente de nombreux avantages. Comme indiqué précédemment, le matériau de la gaine mécanique peut être déterminé en fonction de ses propriétés mécaniques, notamment sa résistance pyroscopique, indépendamment de ses propriétés optiques. Les dimensions de la fenêtre étant relativement réduites, la fibre optique n'est que faiblement fragilisée. En particulier, par rapport à une fibre optique dont la gaine mécanique est entièrement retirée sur le pourtour d'un tronçon, la fibre optique conserve une résistance mécanique proche de sa résistance mécanique initiale. D'autre part, en fonction du matériau et des dimensions de la gaine mécanique, la fibre optique peut conserver une certaine flexibilité.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1A représente, dans une vue en perspective, un exemple de capteur à fibre optique à réseau de Bragg selon l'invention ;
- la figure 1B représente, dans une vue en coupe longitudinale, le capteur de la figure 1A ;
- la figure 2 représente un exemple de procédé de fabrication d'un capteur à fibre optique à réseau de Bragg selon l'invention ;
- la figure 3 représente un balayage de la fibre optique réalisé au cours d'une étape d'ablation de la gaine mécanique ;
- la figure 4 représente un exemple de positionnement du point focal d'un faisceau laser utilisé au cours d'une étape d'ablation de la gaine mécanique.

### EXPOSÉ DÉTAILLÉ DE MODES DE RÉALISATION PARTICULIERS

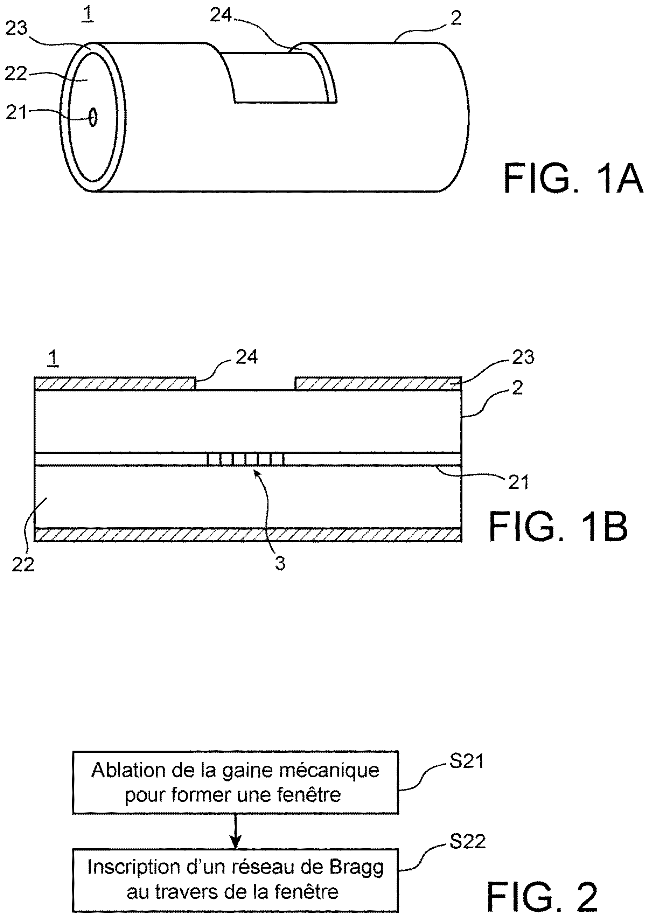

Les figures 1A et 1B représentent, dans une vue en perspective et dans une vue en coupe longitudinale, respectivement, un exemple de capteur à fibre optique à réseau de Bragg selon l'invention. Seul un tronçon du capteur à fibre optique est représenté sur ces figures. Le capteur à fibre optique 1 comprend une fibre optique 2 et un réseau de Bragg 3, visible sur la figure 1B. La fibre optique 2 comporte un coeur 21, une gaine optique 22 entourant le coeur 21 et une gaine mécanique 23 entourant la gaine optique 22. La fibre optique 2 est typiquement une fibre optique monomode. Ses dimensions sont adaptées au transport du signal optique utilisé pour la mesure par le réseau de Bragg 3. Le coeur présente par exemple un diamètre inférieur ou égal à 10 µm, la gaine optique un diamètre compris entre 80 µm et 150 µm et la gaine optique un diamètre compris entre 200 µm et 400 µm. La gaine mécanique 23 a pour fonction de protéger mécaniquement et/ou chimiquement la gaine de protection. Elle peut notamment comprendre un matériau dont la résistance pyroscopique est supérieure ou égale à une température maximale d'utilisation du capteur à fibre optique 1. Le matériau de la gaine de protection présente par exemple une résistance pyroscopique supérieure ou égale à 350 °C, de préférence supérieure ou égale à 800 °C. Il peut comprendre un matériau réfractaire tel que l'oxyde d'aluminium ou l'oxyde de zirconium. Il peut également comprendre un métal tel que l'aluminium, l'or, le cuivre, l'argent ou le nickel. Le réseau de Bragg 3 est inscrit dans le coeur 21. Il est formé par un ensemble de motifs dont l'indice de réfraction diffère de l'indice de réfraction du coeur 21. Selon l'invention, la gaine mécanique 23 comprend une ouverture ou fenêtre 24 s'étendant radialement sur toute son épaisseur, c'est-à-dire entre sa surface interne, en contact avec la gaine optique 22 et sa surface externe formant également la surface externe de la fibre optique 2. L'ouverture 24 est agencée pour permettre le passage d'un faisceau laser pour l'inscription du réseau de Bragg 3. Ses dimensions sont ainsi adaptées à la fois aux dimensions du faisceau laser et aux dimensions du réseau de Bragg. Ainsi, pour un réseau de Bragg 3 s'étendant de manière longitudinale sur un tronçon de la fibre optique 2 appelé « tronçon sensible », l'ouverture 24 peut s'étendre de manière longitudinale sur un tronçon de fibre optique, appelé « tronçon de découpe », dont la longueur est supérieure ou égale à la longueur du tronçon sensible. Par ailleurs, l'ouverture 24 peut s'étendre de manière circonférentielle sur un secteur angulaire défini de sorte qu'elle présente, par projection dans un plan parallèle à un axe longitudinal de la fibre optique, une largeur supérieure ou égale au diamètre du coeur 21. La largeur des motifs du réseau de Bragg pouvant être inférieure au diamètre du coeur 21, l'ouverture 24 peut présenter une largeur projetée inférieure au diamètre du coeur et supérieure ou égale aux dimensions des motifs du réseau de Bragg. À titre d'exemple, le secteur angulaire définissant l'ouverture 24 peut être compris entre 0,5° et 120°.

Le capteur à fibre optique à réseau de Bragg selon l'invention est adapté aussi bien à une mesure ponctuelle de température et/ou de déformation qu'à une mesure répartie. Dans ce dernier cas, le capteur à fibre optique comporte une pluralité d'ouvertures disposées sur différents tronçons de découpe de la fibre optique et une pluralité de réseaux de Bragg inscrits sur des tronçons sensibles, chaque réseau de Bragg étant associé à une ouverture.

La figure 2 représente un exemple de procédé de fabrication d'un capteur à fibre optique à réseau de Bragg selon l'invention. Le capteur à fibre optique est réalisé à partir d'une fibre optique comportant un coeur, une gaine optique entourant le coeur et une gaine mécanique entourant la gaine optique. La fibre optique est typiquement une fibre optique monomode. Dans une première étape S21, une ouverture ou fenêtre est formée par ablation de la gaine mécanique. Comme indiqué précédemment, l'ouverture s'étend radialement sur toute l'épaisseur de la gaine mécanique et s'étend axialement sur un tronçon de découpe suffisamment long pour le passage d'un faisceau laser permettant l'inscription d'un réseau de Bragg. Dans une deuxième étape S22, un réseau de Bragg est inscrit dans la fibre optique au travers de l'ouverture.

L'étape S21 d'ablation de la gaine mécanique peut comprendre une insolation de la gaine mécanique par un faisceau laser femtoseconde focalisé au voisinage de la gaine mécanique. Les propriétés du faisceau laser appliqué pour l'ablation de la gaine mécanique dépendent notamment du matériau et des dimensions de la gaine mécanique. En particulier, chaque impulsion du faisceau laser présente une fluence énergétique supérieure ou égale à un seuil de fluence énergétique d'ablation du matériau de la gaine mécanique. Pour l'or, le seuil de fluence énergétique d'ablation est de 0,5 J/cm² pour une longueur d'onde de 780 nm et une durée d'impulsion de 150 fs. Pour l'aluminium, le seuil de fluence énergétique d'ablation est de 0,11 mJ/cm² pour une longueur d'onde de 800 nm et une durée d'impulsion de 150 fs. Afin d'éviter d'endommager la gaine optique, la fluence énergétique des impulsions du faisceau laser est de préférence déterminée de sorte à être strictement inférieure au seuil de fluence énergétique d'ablation de la gaine optique. Pour une gaine optique en silice, le seuil de fluence énergétique d'ablation est de 2 J/cm² pour une longueur d'onde de 825 nm et une durée d'impulsion de 150 fs. La fluence énergétique des impulsions du faisceau laser influence la profondeur du matériau retiré. La fluence énergétique peut ainsi être déterminée en fonction de l'épaisseur de la gaine mécanique. Elle peut notamment être déterminée de sorte qu'une seule impulsion ou un nombre entier d'impulsions permette le retrait de la gaine mécanique sur toute son épaisseur. Pour la détermination des propriétés du faisceau laser à appliquer pour l'ablation de la gaine mécanique, l'homme du métier pourra notamment se référer aux documents suivants :
- Le Harzic R. et al : « Pulse width and energy influence on laser micromachining of metals in a range of 100 ps to 5 ps », applied surface science 249, 322-331, 2005 ;
- Gamaly E. G. et al : « Ablation of solids by femtosecond lasers: Ablation mechanism and ablation thresholds for metals and dielectric », Physics of plasma 9, 949-957, 2002 ;
- Stuart B. C. et al : « Optical ablation by high-power short-pulse lasers », J. Opt. Soc. Am. B, 459-468, 1996.

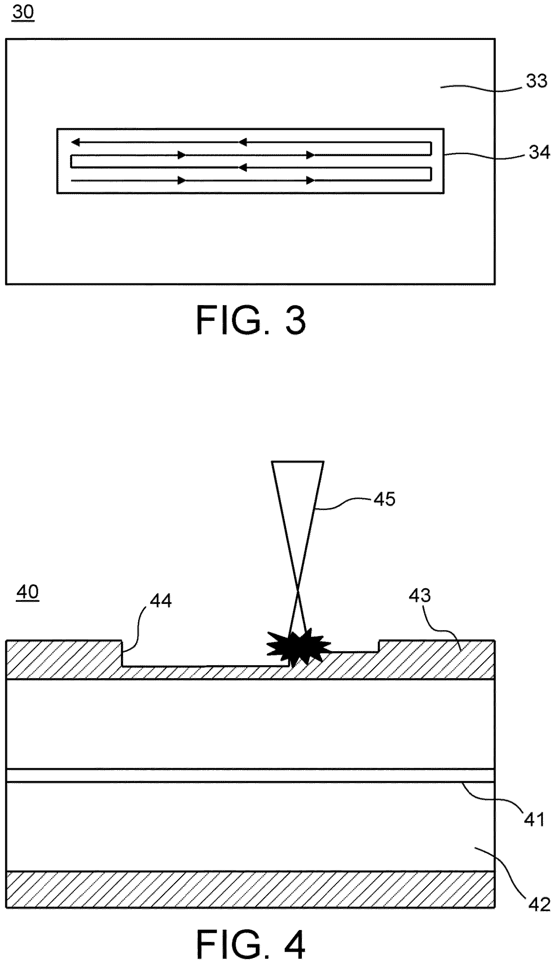

Par ailleurs, lorsque chaque impulsion laser engendre une zone d'ablation dont la surface est inférieure à la surface de l'ouverture, un balayage de la fibre optique par le faisceau laser est nécessaire. La figure 3 illustre une ablation de la gaine mécanique comportant un balayage dans un plan. Sur cette figure, une fibre optique 30 est représentée dans une vue de dessus. Elle comporte notamment une gaine mécanique 33 dans laquelle est formée une ouverture 34. Le balayage comporte une succession de quatre passages, chaque passage étant effectué le long d'un axe parallèle à l'axe longitudinal de la fibre optique. Ce balayage peut être réalisé de façon optique, par exemple à l'aide d'un modulateur spatial de lumière ou d'un miroir galvanométrique associé à une lentille de focalisation, ou de façon mécanique, par déplacement du laser ou d'un élément optique par rapport à la fibre optique. Lorsque la zone d'ablation présente une largeur inférieure à la largeur de l'ouverture, le balayage peut être réalisé le long d'un axe unique. En revanche, lorsqu'à la fois la largeur et la longueur de l'ouverture sont supérieures à la largeur et à la longueur de la zone d'ablation, respectivement, un balayage dans un plan est nécessaire. Alternativement, le balayage peut être réalisé par translation et rotation autour de l'axe longitudinal de la fibre optique.

La figure 4 illustre une forme particulière de réalisation dans laquelle le point focal du faisceau laser est positionné en amont de la gaine mécanique. Sur cette figure, la fibre optique 40 est représentée dans une vue en coupe longitudinale. La fibre optique 40 comporte un coeur 41, une gaine optique 42 entourant le coeur 41 et une gaine mécanique 43 entourant la gaine optique 42. Un faisceau laser 45 est appliqué sur la surface de la gaine mécanique 43 de manière à former une ouverture 44. Dans cet exemple de réalisation, un balayage est nécessaire pour former l'ouverture 44. De plus, plusieurs impulsions sont nécessaires en chaque point de l'ouverture afin de retirer le matériau sur toute l'épaisseur de la gaine mécanique 43. Comme illustré schématiquement sur la figure 4, le faisceau laser 45 est focalisé en amont de la surface extérieure de la gaine mécanique 43. Dans la mesure où la fluence énergétique atteint une valeur maximale au point focal et diminue au-delà du point focal, cette configuration permet de garantir que la fluence énergétique dans la gaine optique sera inférieure à la fluence énergétique dans la gaine mécanique, même en cas de décalage du point focal.

L'étape S22 d'inscription d'un réseau de Bragg peut comprendre l'insolation du coeur de la fibre optique par un faisceau laser ultraviolet. Dans ce cas, le coeur de la fibre optique doit être photosensible. De préférence, le faisceau laser est focalisé au voisinage du coeur de la fibre optique, plus préférentiellement à l'intérieur du coeur. Le faisceau laser peut être continu ou impulsionnel. Dans ce dernier cas, la durée des impulsions est par exemple comprise entre 5 ns et 500 ns.

Alternativement, l'étape S22 d'inscription d'un réseau de Bragg peut comprendre l'insolation du coeur de la fibre optique par un faisceau laser femtoseconde. Le coeur de la fibre optique n'est alors pas nécessairement photosensible. De préférence, le faisceau laser est focalisé au voisinage du coeur de la fibre optique, plus préférentiellement à l'intérieur du coeur. La longueur d'onde du faisceau laser peut être située dans la plage de longueurs d'onde du rayonnement infrarouge, c'est-à-dire dans la plage de 700 nm à 1 mm. L'inscription du réseau de Bragg par un laser femtoseconde présente l'avantage de pouvoir être réalisée à l'aide de la même source laser que celle pour l'ablation de la gaine mécanique.

## Revendications

1. Capteur à fibre optique à réseau de Bragg comprenant une fibre optique (2, 30, 40) comportant un coeur (21, 41), une gaine optique (22, 42) entourant le coeur et une gaine mécanique (23, 33, 43) entourant la gaine optique, le capteur à fibre optique étant **caractérisé en ce que** la gaine mécanique comprend un métal et comprend une ouverture (24, 34, 44) agencée pour permettre l'inscription de motifs d'un réseau de Bragg par passage d'un faisceau laser à travers ladite ouverture, l'ouverture (24, 34, 44) s'étendant de manière circonférentielle sur un secteur angulaire défini de sorte qu'elle présente, par projection dans un plan parallèle à un axe longitudinal de la fibre optique, une largeur supérieure ou égale au diamètre du coeur (21) et s'étendant radialement sur toute son épaisseur, et **en ce que** la fibre optique comporte un réseau de Bragg (3) inscrit dans le coeur au niveau de l'ouverture.

2. Capteur à fibre optique selon la revendication 1, dans lequel l'ouverture (24, 34, 44) présente, par projection dans un plan parallèle à un axe longitudinal de la fibre optique, une largeur supérieure ou égale à une dimension correspondante des motifs du réseau de Bragg (3).

3. Capteur à fibre optique selon l'une des revendications précédentes, dans lequel l'ouverture (24, 34, 44) s'étend de manière circonférentielle sur un secteur angulaire compris entre 0,5 degré et 120 degrés.

4. Capteur à fibre optique selon l'une des revendications précédentes, dans lequel le réseau de Bragg (3) s'étend de manière longitudinale sur un tronçon de la fibre optique appelé « tronçon sensible » et l'ouverture (24, 34, 44) s'étend de manière longitudinale sur un tronçon de la fibre optique appelé « tronçon de découpe », la longueur du tronçon de découpe étant supérieure ou égale à la longueur du tronçon sensible.

5. Procédé de fabrication d'un capteur à fibre optique à réseau de Bragg à partir d'une fibre optique (2, 30, 40) comportant un coeur (21, 41), une gaine optique (22, 42) entourant le coeur et une gaine mécanique (23, 33, 43) entourant la gaine optique, la gaine mécanique comprenant un métal, le procédé comprenant :
▪ une étape (S21) d'ablation de la gaine mécanique (23, 33, 43) sur un tronçon de la fibre optique appelé « tronçon de découpe », de manière à former une ouverture (24, 34, 44) s'étendant de manière circonférentielle sur un secteur angulaire défini de sorte qu'elle présente, par projection dans un plan parallèle à un axe longitudinal de la fibre optique, une largeur supérieure ou égale au diamètre du coeur (21) et s'étendant radialement sur toute l'épaisseur de la gaine mécanique, et
▪ une étape (S22) d'inscription d'un réseau de Bragg (3) dans la fibre optique au travers de l'ouverture (24, 34, 44),
l'étape d'ablation (S21) comprenant une insolation de la gaine mécanique (23, 33, 43) par un faisceau laser (45) focalisé au voisinage de la gaine mécanique, le faisceau laser étant formé d'impulsions femtosecondes.

6. Procédé selon la revendication 5, dans lequel l'étape d'ablation (S21) est configurée de sorte que l'ouverture (24, 34, 44) présente, par projection dans un plan parallèle à un axe longitudinal de la fibre optique, une largeur supérieure ou égale à une dimension correspondante des motifs du réseau de Bragg (3).

7. Procédé selon l'une des revendications 5 et 6, dans lequel l'étape d'ablation (S21) est configurée de sorte que l'ouverture (24, 34, 44) s'étende de manière circonférentielle sur un secteur angulaire compris entre 0,5 degré et 120 degrés, de préférence entre 1 degré et 10 degrés.

8. Procédé selon l'une des revendications 5 à 7, dans lequel l'étape d'ablation (S21) comprend un balayage du faisceau laser sur la gaine mécanique (23, 33, 43).

9. Procédé selon l'une des revendications 5 à 8, dans lequel l'étape d'ablation (S21) comprend une insolation de chaque point de la gaine mécanique (23, 33, 43) correspondant à l'ouverture (24, 34, 44) par une pluralité d'impulsions.

10. Procédé selon l'une des revendications 5 à 9, dans lequel chaque impulsion du faisceau laser présente une fluence énergétique supérieure ou égale à un seuil de fluence énergétique d'ablation de la gaine mécanique (23, 33, 43) et inférieure ou égale à un seuil de fluence énergétique d'ablation de la gaine optique (22, 42).

11. Procédé selon l'une des revendications 5 à 10, dans lequel un point focal du faisceau laser (45) est positionné en amont de la gaine mécanique (23, 33, 43).

12. Capteur à fibre optique selon l'une des revendications 1 à 4 ou procédé selon l'une des revendications 5 à 11, dans lequel la gaine mécanique (23, 33, 43) comprend un matériau dont la résistance pyroscopique est supérieure ou égale à 800 °C.

13. Capteur à fibre optique selon l'une des revendications 1 à 4 et 12 ou procédé selon l'une des revendications 5 à 12, dans lequel la gaine mécanique est constituée d'un ou plusieurs métaux.

14. Capteur à fibre optique selon l'une des revendications 1 à 4, 12 et 13, ou procédé selon l'une des revendications 5 à 13, dans lequel la gaine mécanique (23, 33, 43) présente une épaisseur comprise entre 10 micromètres et 500 micromètres.

## Patentansprüche

1. Glasfasersensor mit Bragg-Spiegel, eine Glasfaser (2, 30, 40) umfassend, die einen Kern (21, 41) enthält, einen optischen Mantel (22, 42), der den Kern umgibt, und einen mechanischen Mantel (23, 33, 43), der den optischen Mantel umgibt, wobei der Glasfasersensor **dadurch gekennzeichnet ist, dass** der mechanische Mantel ein Metall umfasst, und eine Öffnung (24, 34, 44) umfasst, die so angeordnet ist, damit das Einschreiben von Mustern eines Bragg-Spiegels durch den Durchgang eines Laserstrahls durch die Öffnung (24, 34, 44) hindurch ermöglicht wird, wobei sich die Öffnung umlaufend erstreckt auf einem Winkelsektor und so definiert ist, dass sie, durch Projektion in einer Ebene parallel zu einer Längsachse der Glasfaser, eine Breite aufweist, die größer oder gleich dem Durchmesser des Kerns (21) ist und sich radial über seine gesamte Dicke erstreckt, und dass die Glasfaser einen Bragg-Spiegel (3) enthält, der im Kern im Bereich der Öffnung eingeschrieben ist.

2. Glasfasersensor nach Anspruch 1, wobei die Öffnung (24, 34, 44), durch Projektion in einer Ebene parallel zu einer Längsachse der Glasfaser, eine Breite aufweist, die größer oder gleich einer entsprechenden Abmessung der Muster des Bragg-Spiegels (3) ist.

3. Glasfasersensor nach einem der vorhergehenden Ansprüche, wobei sich die Öffnung (24, 34, 44) umlaufend erstreckt auf einem Winkelsektor, der zwischen 0,5 Grad und 120 Grad liegt.

4. Glasfasersensor nach einem der vorhergehenden Ansprüche, wobei sich der Bragg-Spiegel (3) in Längsrichtung über einem Abschnitt der Glasfaser, "empfindlicher Abschnitt" genannt, erstreckt, und die Öffnung (24, 34, 44) sich in Längsrichtung über einem Abschnitt der Glasfaser, "Schneideabschnitt" genannt, erstreckt, wobei die Länge des Schneideabschnitts größer oder gleich der Länge des empfindlichen Abschnitts ist.

5. Verfahren zur Herstellung eines Glasfasersensor mit Bragg-Spiegel ausgehend von einer Glasfaser (2, 30, 40), einen Kern (21, 41) enthaltend, einen optischen Mantel (22, 42), der den Kern umgibt, und einen mechanischen Mantel (23, 33, 43), der den optischen Mantel umgibt, wobei der mechanische Mantel ein Metall umfasst, wobei das Verfahren umfasst:
- einen Schritt (S21) der Ablation des mechanischen Mantels (23, 33, 43) an einem Abschnitt der Glasfaser, "Schneideabschnitt" genannt, derart, dass eine Öffnung (24, 34, 44) gebildet wird, die sich umlaufend erstreckt auf einem Winkelsektor, und so definiert ist, dass sie, durch Projektion in einer Ebene parallel zu einer Längsachse der Glasfaser, eine Breite aufweist, die größer oder gleich dem Durchmesser des Kerns (21) ist und sich radial über die gesamte Dicke des mechanischen Mantels erstreckt, und
- einen Schritt (S22) des Einschreibens eines Bragg-Spiegels (3) in die Glasfaser durch die Öffnung (24, 34, 44) hindurch,
wobei der Ablationsschritt (S21) eine Insolation des mechanischen Mantels (23, 33, 43) durch einen in der Nähe des mechanischen Mantels fokussierten Laserstrahl (45) umfasst, wobei der Laserstrahl aus Femtosekundenimpulsen gebildet ist.

6. Verfahren nach Anspruch 5, wobei der Ablationsschritt (S21) so konfiguriert ist, dass die Öffnung (24, 34, 44), durch Projektion in einer Ebene parallel zu einer Längsachse der Glasfaser, eine Breite aufweist, die größer oder gleich einer entsprechenden Abmessung der Muster des Bragg-Spiegels (3) ist.

7. Verfahren nach einem der Ansprüche 5 und 6, wobei der Ablationsschritt (S21) so konfiguriert ist, dass sich die Öffnung (24, 34, 44) umlaufend erstreckt auf einem Winkelsektor, der zwischen 0,5 Grad und 120 Grad liegt, vorzugsweise zwischen 1 Grad und 10 Grad.

8. Verfahren nach einem der Ansprüche 5 bis 7, wobei der Ablationsschritt (S21) ein Abtasten des Laserstrahls am mechanischen Mantel (23, 33, 43) umfasst.

9. Verfahren nach einem der Ansprüche 5 bis 8, wobei der Ablationsschritt (S21) eine Insolation jedes Punktes des mechanischen Mantels (23, 33, 43) umfasst, der der Öffnung (24, 34, 44) entspricht, durch eine Vielzahl von Impulsen.

10. Verfahren nach einem der Ansprüche 5 bis 9, wobei jeder Impuls des Laserstrahls eine Energiefluenz aufweist, die größer oder gleich einer Energiefluenzschwelle der Ablation des mechanischen Mantels (23, 33, 43) ist und kleiner oder gleich einer Energiefluenzschwelle der Ablation des optischen Mantels (22, 42).

11. Verfahren nach einem der Ansprüche 5 bis 10, wobei ein Brennpunkt des Laserstrahls (45) stromaufwärts des mechanischen Mantels (23, 33, 43) positioniert ist.

12. Glasfasersensor nach einem der Ansprüche 1 bis 4 oder dem Verfahren nach einem der Ansprüche 5 bis 11, wobei der mechanische Mantel (23, 33, 43) ein Material umfasst, dessen pyroskopischer Widerstand größer oder gleich 800 °C ist.

13. Glasfasersensor nach einem der Ansprüche 1 bis 4 und 12 oder dem Verfahren nach einem der Ansprüche 5 bis 12, wobei der mechanische Mantel aus einem oder mehreren Metallen besteht.

14. Glasfasersensor nach einem der Ansprüche 1 bis 4, 12 und 13 oder dem Verfahren nach einem der Ansprüche 5 bis 13, wobei der mechanische Mantel (23, 33, 43) eine Dicke zwischen 10 Mikrometer und 500 Mikrometer aufweist.

## Claims

1. Bragg grating optical fibre sensor comprising an optical fibre (2, 30, 40) including a core (21, 41), an optical cladding (22, 42) surrounding the core and a mechanical coating (23, 33, 43) surrounding the optical cladding, the optical fibre sensor being **characterised in that** the mechanical coating comprises a metal and comprises an opening (24, 34, 44) arranged to enable patterns of a Bragg grating to be inscribed by passing a laser beam through said opening, the opening (24, 34, 44) extending circumferentially over a defined angular sector so that it presents, by projection into a plane parallel to a longitudinal axis of the optical fibre, a width greater than or equal to the diameter of the core (21) and extending radially over the entire thickness thereof, and **in that** the optical fibre includes a Bragg grating (3) inscribed in the core at the opening.

2. Optical fibre sensor according to claim 1, wherein the opening (24, 34, 44) presents, by projection in a plane parallel to a longitudinal axis of the optical fibre, a width greater than or equal to a corresponding dimension of the patterns of the Bragg grating (3).

3. Optical fibre sensor according to one of the preceding claims, wherein the opening (24, 34, 44) extends circumferentially over an angular sector of between 0.5 degrees and 120 degrees.

4. Optical fibre sensor according to one of the preceding claims, wherein the Bragg grating (3) extends longitudinally over a portion of the optical fibre referred to as the "sensitive portion" and the opening (24, 34, 44) extends longitudinally over a portion of the optical fibre called the "cutout portion", the length of the cutout portion being greater than or equal to the length of the sensitive portion.

5. Method for manufacturing a Bragg grating optical fibre sensor from an optical fibre (2, 30, 40) including a core (21, 41), an optical cladding (22, 42) surrounding the core and a mechanical coating (23, 33, 43) surrounding the optical cladding, the mechanical coating comprising a metal, the method comprising:
▪ a step (S21) of ablating the mechanical coating (23, 33, 43) over a portion of the optical fibre called the "cutout portion", so as to form an opening (24, 34, 44) extending circumferentially over a defined angular sector so that it presents, by projection into a plane parallel to a longitudinal axis of the optical fibre, a width greater than or equal to the diameter of the core (21) and extending radially over the entire thickness of the mechanical coating, and
▪ a step (S22) of inscribing a Bragg grating (3) in the optical fibre through the opening (24, 34, 44),
the ablation step (S21) comprising an insolation of the mechanical coating (23, 33, 43) by a laser beam (45) focused in the vicinity of the mechanical coating, the laser beam being formed by femtosecond pulses.

6. Method according to claim 5, wherein the ablation step (S21) is configured so that the opening (24, 34, 44) presents, by projection in a plane parallel to a longitudinal axis of the optical fibre, a width greater than or equal to a corresponding dimension of the patterns of the Bragg grating (3).

7. Method according to one of claims 5 and 6, wherein the ablation step (S21) is configured so that the opening (24, 34, 44) extends circumferentially over an angular sector between 0.5 degrees and 120 degrees, preferably between 1 degree and 10 degrees.

8. Method according to one of claims 5 to 7, wherein the ablation step (S21) comprises a sweeping of the laser beam over the mechanical coating (23, 33, 43).

9. Method according to one of claims 5 to 8, wherein the ablation step (S21) comprises an insolation of each point on the mechanical coating (23, 33, 43) corresponding to the opening (24, 34, 44) by a plurality of pulses.

10. Method according to one of claims 5 to 9, wherein each pulse of the laser beam has an energy fluence greater than or equal to a threshold of energy fluence of ablation of the mechanical coating (23, 33, 43) and less than or equal to a threshold of energy fluence of ablation of the optical cladding (22, 42).

11. Method according to one of claims 5 to 10, wherein a focal point of the laser beam (45) is positioned upstream of the mechanical coating (23, 33, 43).

12. Optical fibre sensor according to one of claims 1 to 4 or method according to one of claims 5 to 11, wherein the mechanical coating (23, 33, 43) comprises a material the pyroscopic resistance of which is greater than or equal to 800 °C.

13. Optical fibre sensor according to one of claims 1 to 4 and 12 or method according to one of claims 5 to 12, wherein the mechanical coating consists of one or more metals.

14. Optical fibre sensor according to one of claims 1 to 4, 12 and 13, or method according to one of claims 5 to 13, wherein the mechanical coating (23, 33, 43) has a thickness of between 10 micrometres and 500 micrometres.
